(19) Europäisches Patentamt
European Patent Office
Office européen des brevets

(11) **EP 4 172 575 B1**

(12) **EUROPEAN PATENT SPECIFICATION**

(45) Date of publication and mention
of the grant of the patent:
**30.07.2025   Bulletin 2025/31**

(51) International Patent Classification (IPC):
***G01F 1/84*** *(2006.01)*          ***G01F 15/02*** *(2006.01)*

(21) Application number: **20745351.5**

(52) Cooperative Patent Classification (CPC):
**G01F 1/84; G01F 15/024**

(22) Date of filing: **24.06.2020**

(86) International application number:
**PCT/US2020/039301**

(87) International publication number:
**WO 2021/262158 (30.12.2021 Gazette 2021/52)**

(54) **METHOD, SYSTEM, AND ELECTRONICS FOR CORRECTING A CORIOLIS FLOW METER MEASUREMENT FOR TEMPERATURE EFFECTS**

VERFAHREN, SYSTEM UND ELEKTRONIK ZUR KORREKTUR EINER CORIOLIS-DURCHFLUSSMESSUNG AUF TEMPERATUREINFLÜSSE

PROCÉDÉ, SYSTÈME ET ÉLECTRONIQUE DE CORRECTION D'UNE MESURE DE DÉBITMÈTRE DE CORIOLIS DESTINÉE À DES EFFETS DE TEMPÉRATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.05.2023   Bulletin 2023/18**

(73) Proprietor: **Micro Motion, Inc.**
**Boulder, CO 80301 (US)**

(72) Inventors:
• **PRUYSEN, Aart R.**
**6715 HN Ede (NL)**
• **GARNETT, Robert Barclay**
**Boulder, CO 80301 (US)**
• **PATTEN, Andrew Timothy**
**Boulder, CO 80302 (US)**

(74) Representative: **Ellis, Christopher Paul**
**Ollila Law Limited**
**Unit 7 The Courtyard**
**Timothys Bridge Road**
**Stratford upon Avon CV37 9NP (GB)**

(56) References cited:
**WO-A1-01/71290          WO-A1-2008/039203
WO-A1-2019/195074**

• **WANG T ET AL: "Coriolis mass flow measurement at cryogenic temperatures", FLOW MEASUREMENT AND INSTRUMENTATION, BUTTERWORTH-HEINEMANN, OXFORD, GB, vol. 20, no. 3, June 2009 (2009-06-01), pages 110 - 115, XP026144701, ISSN: 0955-5986, [retrieved on 20090306], DOI: 10.1016/ J.FLOWMEASINST.2009.02.003**

EP 4 172 575 B1

**Description**

TECHNICAL FIELD

The present Application is directed towards Coriolis flow meters, and more particularly, to correcting a Coriolis flow meter measurement for temperature effects.

BACKGROUND

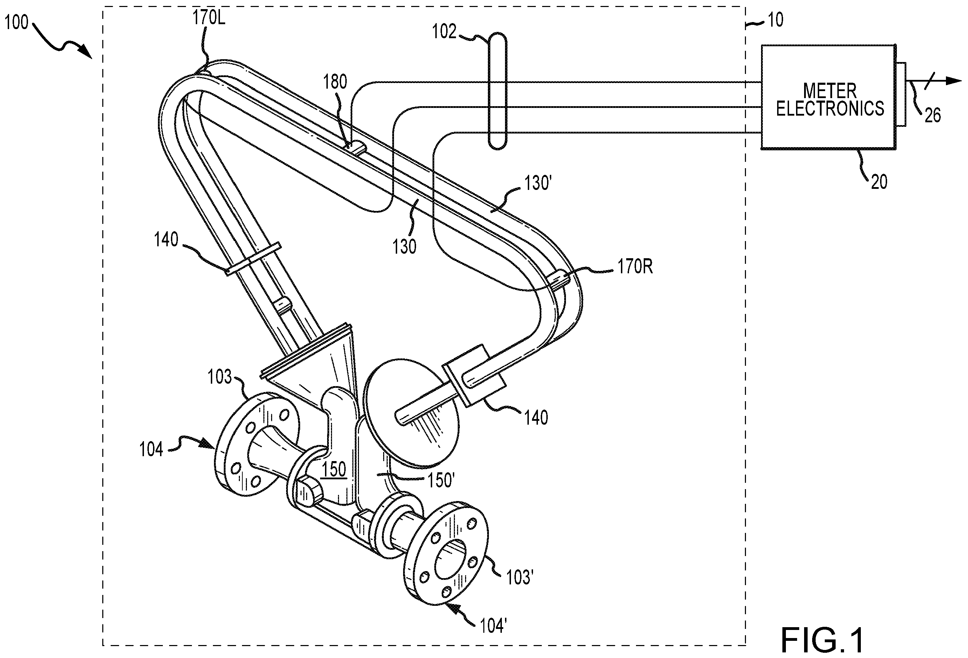

Coriolis mass flowmeters utilize Coriolis forces induced by fluid flowing through one or more vibrating tubes to measure mass flow rate. Figure 1 depicts example Coriolis flow meter 100 comprising a meter assembly 10 and meter electronics 20. Meter assembly 10 responds to changes in a process fluid flow. Meter electronics 20 is connected to meter assembly 10 via leads 102, and provides density, volumetric flow rate, and mass flow rate information to operators over meter electronics interface 26, in addition to other information.

Meter assembly 10 includes manifolds 150 and 150', flanges 103 and 103', two parallel flow tubes 130 and 130', driver 180, and velocity pick-off sensors 170L and 170R. Flow tubes 130 and 130' bend at two symmetrical locations along their length and are essentially parallel throughout their length. Brace bars 140 and 140' serve to define an axis about which each flow tube oscillates.

When flanges 103 and 103' are connected via inlet end 104 and exit end 104' to a process line (not shown), process fluid enters inlet end 104 of the meter through flange 103 and is conducted through manifold 150. Manifold 150 divides and routes the process fluid through flow tubes 130 and 130'. Upon exiting flow tubes 130 and 130', the process fluid is recombined in a single stream by manifold 150' and routed to outlet end 104', connected by flange 103' to the process line (not shown).

Both flow tubes 130 and 130' are driven by driver 180 in opposite directions in a first out-of-phase bending mode of the flowmeter. Driver 180 may comprise any one of many well-known arrangements, such as a magnet mounted to flow tube 130' and an opposing coil mounted to flow tube 130 and through which an alternating current is passed for vibrating both flow tubes. A suitable driver voltage is applied by meter electronics 20 to driver 180. In further embodiments, Coriolis flow meter 100 may comprise more than one driver 180, providing a multiple-input arrangement that can generate other bending modes.

While Coriolis flow meter 100 depicts a dual, curved flow tube design, this is not intended to be limiting. Those of skill understand that other examples of Coriolis flow meters 100 may include one, or any number of flow tubes. Those of skill will further understand that other Coriolis flow meters may include straight flow tubes, or any other configuration.

Meter electronics 20 provides the drive signal to driver 180 to vibrate flow tubes 130 and 130' over leads 102. Meter electronics 20 receives the left and right velocity signals from velocity pick-off sensors 170L and 170R over leads 102, which can be used to compute the mass flow rate, volumetric rate, and/or density information for the flow passing through meter assembly 10.

The left and right velocity signals from pick-off sensors 170L and 170R are used to determine a phase difference $\Delta T$ between the pick-off sensors 170L and 170R representing the Coriolis forces on the flow tubes. The phase difference $\Delta T$ is used to determine a mass flow value $\dot{m}$ using Equation 1:

$$\dot{m} = FCF(\Delta T - \Delta T_{zero}),  \qquad\qquad (\text{Equation } 1)$$

where FCF, the Flow Calibration Factor, and $\Delta T_0$, the zero offset, are determined during factory calibration. The FCF captures the stiffness of the one or more flow tubes 130, 130', which is directly proportional to the mass flow rate of the fluid flowing through the tube. The FCF is determined by flowing water at ambient conditions through the Coriolis mass flowmeter and comparing the indicated mass to the mass measured by a reference flow meter.

Corrections are typically made to the Coriolis flow meter 100 mass flow measurements after installation at a customer site to account for differences between the customer site and factory environmental conditions. For example, changes in temperature and fluid pressure can change the stiffness of flow tubes 130, 130', which can introduce errors in the meter mass flow and density measurements.

Temperature corrections required for mass flow and density measurements higher than 0 C are different than the temperature corrections required below 0 C temperatures. The temperature correction made to measured mass flow values $\dot{m}$ for changes in stiffness due to Young's modulus higher than 0 C is approximately linear. For temperatures below 0 C, corrections to mass flow measurement $\dot{m}$ are typically better represented by a polynomial equation. Example of corrections to mass flow measurement known in the prior art are, for example, disclosed by WANG T. ET AL: "Coriolis mass flow measurement at cryogenic temperatures", in FLOW MEASUREMENT AND INSTRUMENTATION, BUTTERWORTH-HEINEMANN, OXFORD, GB, vol. 20, no. 3, June 2009 (2009-06), pages 110-115, DOI:10.1016/J.FLOWMEASINST.2009.02.003. In Wang. T. et al., a Coriolis flowmeter is calibrated at a reference condition and the flow calibration factor is corrected considering the non-linearity of Young's modulus and thermal expansion change with temperature, in order to provide accurate mass flow measurement at cryogenic temperatures.

It has been empirically observed that the temperature correction for density measurements is not the same as the temperature correction based on mass flow measurements for temperatures between 0 and 50 C. However, it has been difficult to characterize the change in flow tube stiffness based on Young's modulus below 0 C due to the limitations in flow rate available in cryogenic calibration facilities. Thus far, it has only been possible to acquire empirical data to characterize changes in flow tube stiffness based on temperature for smaller flow meters, or those with flow tubes that are 10.16 centimetres (4 inches) or smaller.

There is a demand for more precise mass flow measurements at sub-zero and cryogenic temperatures. One possible application is high volume flows of liquified natural gas at a temperature of -160 C.

It is highly desirable to provide more accurate fluid measurements with Coriolis flow meters at sub-zero and cryogenic temperatures.

## SUMMARY

A method for correcting a mass flow value $\dot{m}$ measured using a Coriolis flow meter for temperature effects at a known fluid temperature *temp* below 0 C is provided. The method comprises receiving a known fluid density $\rho_{ref}$, receiving the known fluid temperature *temp,* receiving a time period *Tp,* determining a Young's modulus temperature correction for density $TFy_D$ based on the known fluid density $\rho_{ref}$, the known fluid temperature *temp,* and the time period *Tp,* determining a Young's modulus temperature correction for mass flow $TFy_M$ based on a temperature correction constant *k* and the Young's modulus temperature correction for density $TFy_D$, and correcting the mass flow value $\dot{m}$ using the Young's modulus temperature correction for mass flow $TFy_M$.

A system for correcting a mass flow value $\dot{m}$ measured using a Coriolis flow meter for temperature effects at a known fluid temperature *temp* below 0 C is provided. The system comprises a fluid density receiving module configured to receive a known fluid density $\rho_{ref}$, a fluid temperature receiving module configured to receive the known fluid temperature *temp,* a period determination module configured to receive a time period *Tp,* a Young's modulus temperature correction for density determination module configured to determine a Young's modulus temperature correction for density $TFy_D$ based on the known fluid density $\rho_{ref}$, the known fluid temperature *temp,* and the time period *Tp,* a Young's modulus temperature correction for mass flow determination module configured to determine a Young's modulus temperature correction for mass flow $TFy_M$ based on a temperature correction constant *k* and the Young's modulus temperature correction for density $TFy_D$, and a mass flow correction module configured to correct the mass flow value $\dot{m}$ using the Young's modulus temperature correction for mass flow $TFy_M$.

A meter electronics for correcting a mass flow value $\dot{m}$ measured using a meter assembly of a Coriolis flow meter for temperature effects at a known fluid temperature *temp* below 0 C is provided. The meter electronics comprising a system processor is configured to receive a known fluid density $\rho_{ref}$, receive the known fluid temperature *temp,* receive a time period *Tp,* determine a Young's modulus temperature correction for density $TFy_D$ based on the known fluid density $\rho_{ref}$, the known fluid temperature *temp,* and the time period *Tp,* determine a Young's modulus temperature correction for mass flow $TFy_M$ based on a temperature correction constant *k* and Young's modulus temperature correction for density $TFy_D$, and correct the mass flow value $\dot{m}$ using the Young's modulus temperature correction for mass flow $TFy_M$.

## ASPECTS

According to a further aspect, the time period *Tp* may be determined based on a measured fluid density $\rho_{indic}$.

According to a further aspect, the method may further comprise receiving a phase difference $\Delta T$, and determining the Young's modulus temperature correction for density $TFy_D$ may be further based on the phase difference $\Delta T$.

According to a further aspect, the method may further comprise receiving a fluid pressure *P*, and the Young's modulus temperature correction for density $TFy_D$ may be further based on the fluid pressure *P*.

According to a further aspect, the method may further comprise determining an expansion temperature correction for density *TFe,* and the Young's modulus temperature correction for density $TFy_D$ may be further determined based on the expansion temperature correction for density *TFe* based on a known temperature $temp_{ref}$.

According to a further aspect, the temperature correction constant k may be between 0.8 and 1.2.

According to a further aspect, the temperature correction constant k may be one.

According to a further aspect, correcting a mass flow value $\dot{m}$ using the Young's modulus temperature correction for mass flow $TFy_M$ may further comprise determining a mass error value $Error_m$ using the Young's modulus temperature correction for mass $TFy_M$.

According to a further aspect, the fluid density receiving module may be further configured to determine a measured fluid density $\rho_{indic}$, and the period determination module is further configured to determine the time period *Tp* based on the measured fluid density $\rho_{indic}$.

According to a further aspect, the system may further comprise a phase difference determination module configured to determine a phase difference $\Delta T$, and the Young's modulus temperature correction for density determination module may further be configured to determine the Young's modulus temperature correction for density $TFy_D$ based on the phase difference $\Delta T$.

According to a further aspect, the system may further comprise a fluid pressure determination module configured to determine a measured fluid pressure $P_{indic}$, and the Young's modulus temperature correction for density determination module may be further configured to determine the Young's modulus temperature correction for density $TFy_D$ based on the fluid pressure $P$.

According to a further aspect, the system may further comprise an expansion temperature correction module configured to determine an expansion temperature correction for density $TFe$ based on a known temperature $temp_{ref}$, and the Young's modulus temperature correction for density module may be further configured to determine the Young's modulus temperature correction for density $TFy_D$ based on the expansion temperature correction for density $TFe$.

According to a further aspect, the temperature correction constant k may be between 0.8 and 1.2.

According to a further aspect, the temperature correction constant k may be one.

According to a further aspect, the mass flow correction module may be further configured to determine a mass error value $Error_m$ using the Young's modulus temperature correction for mass $TFy_M$.

According to a further aspect, the time period $Tp$ may be determined based on a measured fluid density $\rho_{indic}$.

According to a further aspect, the system processor may be further configured to receive a phase difference $\Delta T$, and determine the Young's modulus temperature correction for density $TFy_D$ may be further based on the phase difference $\Delta T$.

According to a further aspect, the system processor may be further configured to receive a fluid pressure P, and the Young's modulus temperature correction for density $TFy_D$ may be further based on the fluid pressure $P$.

According to a further aspect, the system processor may be further configured to determine an expansion temperature correction for density $TFe$, and the Young's modulus temperature correction for density $TFy_D$ may be further determined based on the expansion temperature correction for density $TFe$ based on a known temperature $tempref$.

According to a further aspect, the temperature correction constant k may be between 0.8 and 1.2.

According to a further aspect, the temperature correction constant k may be one.

According to a further aspect, correcting a mass flow value $\dot{m}$ using the Young's modulus temperature correction for mass flow $TFy_M$ may further comprise determining a mass error value $Error_m$ using the Young's modulus temperature correction for mass $TFy_M$.

## BRIEF DESCRIPTION OF THE DRAWINGS

The same reference number represents the same element on all drawings. The drawings are not necessarily to scale.

    Figure 1 depicts Coriolis flow meter 100;
    Figure 2 depicts system 200, in accordance with an embodiment;
    Figure 3 depicts method 300, in accordance with an embodiment; and
    Figure 4 depicts system 400, in accordance with an embodiment.

## DETAILED DESCRIPTION

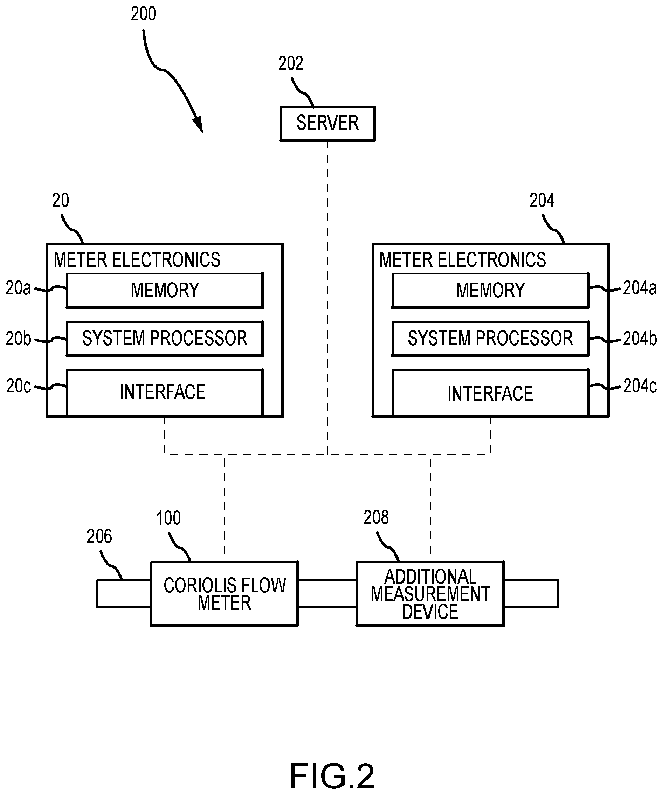

Figures. 2-4 and the following description depict specific examples to teach those skilled in the art how to make and use the best mode of the Application. For the purpose of teaching inventive principles, some conventional aspects have been simplified or omitted. Those skilled in the art will appreciate variations from these examples that fall within the scope of the Application. Those skilled in the art will appreciate that the features described below may be combined in various ways to form multiple variations of the Application. As a result, the Application is not limited to the specific examples described below, but only by the claims and their equivalents.

Figure 2 depicts system 200 in accordance with an embodiment. System 200 may be used for temperature correcting a mass flow value $\dot{m}$ measured using a Coriolis flow meter for temperature effects at a fluid temperature below 0 C. For example, system 200 may be used to provide temperature corrections, such as those due to Young's modulus, the modulus of elasticity, thermal expansion, or pressure effects, based on temperature on the mass flow value m measured with a Coriolis flow meter.

System 200 includes Coriolis flow meter 100, meter electronics 20, and process conduit 206. Process conduit 206 carries a flow of fluid to be measured by Coriolis flow meter 100.

Meter electronics 20 may be used to generate a mass flow value m for the fluid measured with meter assembly 10 of Coriolis flow meter 100, or to temperature correct a mass flow value $\dot{m}$ obtained using meter assembly 10. Meter electronics 20 includes a memory 20a, a system processor 20b, and an interface 20c.

Memory 20a comprises an electronically readable medium or a computer readable medium configured to store computer program instructions. In examples, memory 20a may include a non-transitory medium. Computer program instructions stored on the memory 20a may perform a portion or all of the steps described in relation to method 300 or execute a portion or all of the modules of system 400.

System processor 20b may be configured to execute computer instructions, which perform a portion or all of the steps described in relation to method 300 or execute a portion or all of the modules described in relation to system 400. In embodiments, system processor 20b may include a single, or any multiple number of processors, as will be understood by those of skill in the art.

Interface 20c is configured to communicate with meter assembly 10 of Coriolis flow meter 100. Interface 20c may be configured to communicate with devices external to electronics 20, such as, for example, a pressure sensor, a temperature sensor, or any other sensor known to those of skill.

In embodiments, system 200 may comprise an additional measurement device 208. In embodiments, additional measurement device 208 may comprise a device capable of providing density measurements, such as a densitometer, a gas chromatograph, an additional Coriolis meter, or any other type of measurement device known to those of skill. In embodiments, additional measurement device 208 may include a corresponding meter electronics 204, as depicted in Figure 2. Like meter electronics 20, meter electronics 204 may comprise a memory 204a, system processor 204b, and an interface 204c. In further embodiments, however, additional measurement device 208 may provide signals and information directly to interface 20c of meter electronics 20.

In further embodiments, system 200 may include a server 202. In embodiments, server 202 may be in communication with interface 20c of meter electronics 20 and/or interface 204c of meter electronics 204. Any portion of the steps described in relation to method 300 or the modules described in relation to system 400 may be stored or executed on server 202.

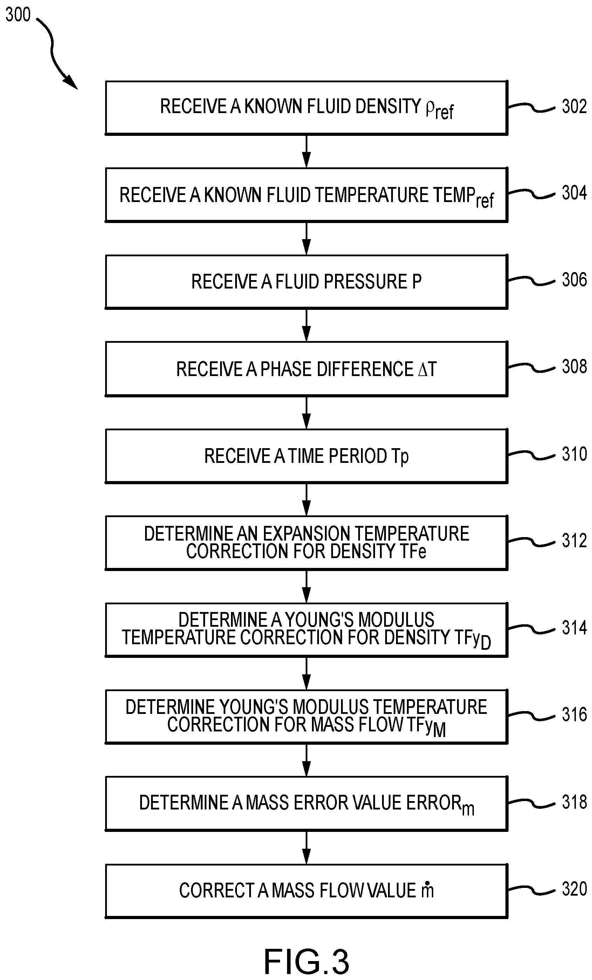

FIG. 3 depicts a method 300 in accordance with an embodiment. Method 300 may be used for correcting a mass flow value $\dot{m}$ measured using a Coriolis flow meter for temperature effects at a known fluid temperature $temp_{ref}$ below 0 C. For example, method 300 may be used to provide measurement corrections, such as those that correct for changes associated with changes in Young's modulus, the modulus of elasticity, thermal expansion, or pressure effects, based on temperature on the mass flow value $\dot{m}$ measured with Coriolis flow meter 100.

Method 300 begins with step 302. In step 302, a known fluid density $\rho_{ref}$ is received. Method 300 continues with step 304. In step 304, the known fluid temperature $temp$ is received. The known fluid density $\rho_{ref}$ and the known fluid temperature $temp$ may be well understood due to the nature of the fluid being measured.

Method 300 continues with step 310. In step 310 a time period $Tp$ is received. Time period $Tp$ is the period of time of the vibrating flow tube 130, 130'.

In embodiments, time period $Tp$ may be measured directly using a vibration sensor coupled to a flow tube 130, 130', including, for example, one or both of left and right velocity pick-off sensors 170L and 170R of Coriolis flow meter 100.

In further embodiments of step 310, however, time period $Tp$ may be determined indirectly based on the measured fluid density $\rho_{inaic}$, the phase difference $\Delta T$, and a fluid pressure P as follows.

In the method where time period $Tp$ is determined indirectly, step 310 may further comprise steps 306 and 308. In step 306, a fluid pressure P may be received. In embodiments, fluid pressure P may comprise a fluid pressure determined using a pressure transducer positioned just upstream or downstream of Coriolis flow meter 100 in process conduit 206. In further embodiments, however, fluid pressure $P$ may comprise a pressure measurement that is internal to Coriolis flow meter 100, or any other fluid pressure measurement known to those of skill in the art. In embodiments, fluid pressure $P$ may comprise a known or estimated fluid pressure.

In step 308, a phase difference $\Delta T$ may be received. In embodiments, the phase difference $\Delta T$ may be determined using velocity pick-off sensors 170L and 170R of Coriolis flow meter 100. In further embodiments, however, phase difference $\Delta T$ may be determined indirectly using the measured mass flow value m, FCF, a combined temperature factor TF, and a fluid temperature $temp$, as will be understood by those of skill.

In embodiments, the measured fluid density $\rho_{indic}$ may be measured with a densitometer. For example, the measured fluid density $\rho_{indic}$ may be received from additional measurement device 208 in system 200, which may comprise a densitometer. In further embodiments, additional measurement device 208 in system 200 may comprise a gas chromatograph that may provide the measured fluid density $\rho_{indic}$.

Coriolis flow meter 100 is typically calibrated at factory conditions at a temperature between 20-30 C. In many cases, a Coriolis flow meter is calibrated using two fluids, such as ambient air and water, by determining a mass flow value $\dot{m}$ and a measured fluid density $\rho_{indic}$ value for each fluid. Using these measured values for mass flow value $\dot{m}$ and a measured fluid density $\rho_{indic}$, it is possible to determine calibration constants $K_1$ and $K_2$, one constant for each respective fluid.

Calibration values $C_1$ and $C_2$, which are valid for a temperature of 0 C and a pressure of 0 barg, can then be calculated using calibration constants $K_1$ and $K_2$ via Equations 2 and 3. Calibration value $C_1$ is proportional to inertia moment and inversely proportional to flow area of the flow tube 130, 130':

$$C_1 = \frac{D_2 - D_1}{(K_2^2 - K_1^2)}.$$ 

(Equation 2)

Calibration value $C_2$ is proportional to the mass of flow tube 130, 130' material divided by fluid volume:

$$C_2 = \frac{K_1^2}{(K_2^2 - K_1^2)}$$ 

(Equation 3)

In Equations 2 and 3, $D_1$ is the outer diameter of flow tube 130, 130', and $D_2$ is the inner diameter of flow tube 130, 130'.
A measured fluid density $\rho_{inaic}$ may be determined using Equation 4:

$$\rho_{indic} = \left(\frac{TF_d * T^2 - K_1^2}{K_2^2 - K_1^2}\right) * (D_2 - D_1) + D_1 - FD * (\Delta T)^2 * 10^{-9} + pcd * P .$$ 

(Equation 4)

In Equation 4, $TF_d$ is a combined temperature correction coefficient for density. *FD* is a constant to correct the measured fluid density $\rho_{indic}$ under flowing conditions, as will be understood by those of skill in the art. In Equation 4, *pcd* is a pressure correction for density.
Equation 4 can be re-arranged to Equation 5:

$$T_p^2 = \frac{\frac{(\rho_{indic} + FD*(\Delta T)^2 * 10^{-9} + pcd*P - D_1)(K_2^2 - K_1^2)}{(D_2 - D_1)} + K_1^2}{TF_d}$$ 

(Equation 5)

In embodiments, time period squared $T_p^2$ may be determined based on measured fluid density $\rho_{indic}$, fluid pressure $P$, and phase difference $\Delta T$ using Equation 5. In further embodiments, however, the flow effect on the measured fluid density $\rho_{indic}$ represented by the *FD* * $(\Delta T)^2$ * $10^{-9}$ term in Equation 5, may be very small, and therefore ignored. The pressure correction for density *pcd* may also be small, and therefore Equation 5 may be further simplified by making *pcd* equal to zero. This may provide for the simplified embodiment of Equation 6:

$$T_p^2 = \frac{\frac{(\rho_{indic})(K_2^2 - K_1^2)}{(D_2 - D_1)} + K_1^2}{TF_d}$$ 

(Equation 6)

According to Equation 6, time period squared $T_p^2$ may be determined based on measured fluid density $\rho_{indic}$.
Method 300 continues with step 314. In step 314, Young's modulus temperature correction for density $TFy_D$ is determined. Young's modulus is affected by material expansion and the changing geometry of the flow tube due to temperature and, to a lesser degree, pressure.
In embodiments, Young's modulus temperature correction for density $TFy_D$ may be determined using any method known to those of skill in the art. In further embodiments, however, Young's modulus temperature correction for density $TFy_D$ may be determined based on the known fluid density $\rho_{ref}$, the fluid temperature *temp,* and the time period $Tp$.
For example, a known fluid density $\rho_{ref}$ is related to Young's modulus *E(temp,P)* via exact theory according to Equation 7:

$$\rho_{ref} = \frac{12.36}{64 * \pi^2} * \frac{(D_o^4 - D_i^4)}{L^4 * D_i^2} * E(temp, P) * T_p^2 - \frac{(D_o^2 - D_i^2)}{D_i^2} * \rho_{tube\ material} - FD * (\Delta T)^2 *$$ 

$$10^{-9}.$$ 

(Equation 7)

In Equation 7, *FD* is the flow effect on density, *L* is the length of the flow tube 130, 130', $D_o$ is the outer diameter of flow tube

130, 130', and $D_i$ is the inner diameter of flow tube 130, 130'. When the temperature *temp* is 0 C and the fluid pressure P is 0 barg, Equation 7 may be re-written as Equation 8:

$$\rho_{ref} = \frac{TF_y*PF_{C1}*C_1*T_p^2}{(TF_e)^2} - \frac{C_2}{(TFe)^3*PF_{C2}} - FD*(\Delta T)^2*10^{-9}, \qquad \text{(Equation 8)}$$

where $PF_{c1}$ is a pressure factor which represents a combination of Young's modulus and geometry changes due to fluid pressure $PF_{c1} = 1 + pc_{c1}*P$, with $pc_{c1}$ being the pressure coefficient for constant $C_1$. In Equation 8, $PF_{C2}$ is a pressure factor which relates to the change of fluid volume due to pressure $PF_{C2} = 1 + pc_{c2}*P$, where $pc_{c2}$ is a pressure coefficient for constant $C_2$. For example, for Micro Motion flow meter model CMF400, $pc_{c1}$ is 3.45 * $10^{-5}$, $pc_{c2}$ is 0.99 * $10^{-5}$, and the pressure effect is - 0.145 kg/m$^3$/bar.

In Equation 8, $TF_y$ is the temperature factor due to Young's modulus. At cryogenic temperatures, the temperature factor due to Young's modulus $TF_y$ may be non-linear. For example, in the Journal of Applied Physics article, "Stainless steel elastic constants at low temperatures" written by Mr. H.M. Ledbetter, in March 1981, the polynomial of Equation 9 is proposed for stainless steel at cryogenic temperatures:

$$TF_y = 1 - tc_y * temp - 3.5 * 10^{-7*}(temp)^2 - 2 * 10^{-9*}(temp)^3 - 1.3 * 10^{-11*}(temp)^4. \qquad \text{(Equation 9)}$$

In Equation 9, *temp* represents a temperature, which can be a known or a measured temperature. In embodiments of step 314, known temperature $temp_{ref}$ may be used to determine the temperature factor due to Young's modulus $TF_y$.

In Equation 8, known fluid density $\rho_{ref}$ further depends on *TFe,* an expansion temperature correction for density. The expansion temperature correction for density *TFe* may be determined using any method known to those of skill in the art. In embodiments, step 314 may further comprise step 312. In step 312, an expansion temperature correction for density *TFe* may be determined based on empirical data relating to flow tube material expansion.

In embodiments, the expansion temperature correction for density *TFe* may be non-linear. For example, the article "Low temperature thermal expansion of iron-chromium-nickel alloys of different stabilities" published by Academy of Sciences, Ukraine in February 1978 provides the following polynomial Equation 10 describing the temperature correction for thermal expansion at cryogenic temperatures:

$$TF_e = 1 + 16.061 * 10^{-6} * temp + 5.65 * 10^{-9} * temp^2 - 6.007 * 10^{-11} * temp^3.$$

$$\text{(Equation 10)}$$

In embodiments of step 312, the known temperature $temp_{ref}$ may be used to determine the expansion temperature correction for density *TFe.*

Using the known fluid density $\rho_{ref}$, the phase difference $\Delta T$, the fluid pressure P, the known fluid temperature $temp_{ref}$, and the time period *Tp,* it is therefore possible to determine the Young's modulus temperature correction for density $TF_{yd}$ via Equation 11:

$$TF_{yd} = \frac{\left(\rho_{ref} + \frac{C_2}{TF_e^3*PF_{C2}} + FD*(\Delta T)^2*10^{-9}\right)(TFe^2)}{T_p^2 PF_{C1} C_1}. \qquad \text{(Equation 11)}$$

Because the Young's modulus of the flow tubes affects the vibration of flow tubes 130, 130', both the mass flow measurement $\dot{m}$ and the fluid density measurement $p$ are affected by changes in Young's modulus. The vibration of the tubes is a function of the flow tube 130, 130' material properties, and the flow tubes 130, 130' are typically fabricated from steel.

In further embodiments, however, the flow effect on the fluid density represented by the $FD*(\Delta T)^2*10^{-9}$ term in Equation 11, may be very small, and therefore ignored. In addition, pressure factors for C1, PFC1 and PFC2, may also represent small changes in the Young's modulus temperature correction for density $TF_{yd}$. Setting the flow effect on fluid density *FD* to zero and pressure factors PFC1 and PFC2 to 1, may provide for the simplified representation of Young's modulus temperature correction for density $TF_{yd}$ of Equation 12:

$$TF_{yd} = \frac{\left(\rho_{ref} + \frac{C_2}{TF_e^3*}\right)(TFe^2)}{T_p^2 C_1}. \qquad \text{(Equation 12)}$$

According to Equation 12, the Young's modulus temperature correction for density $TF_{yd}$ may be determined based only on known fluid density $\rho_{ref}$, the known fluid temperature $temp_{ref}$, and the time period $Tp$.

Once the Young's modulus temperature correction for density $TF_{yd}$ is determined, method 300 may continue with step 316. In step 316, a Young's modulus temperature correction for mass flow $TFy_M$ is determined based on a temperature correction constant k multiplied by Young's modulus temperature correction for density $TFy_D$, as represented by Equation 13:

$$TF_{ym} = k * TF_{yD} \qquad \text{(Equation 13)}$$

The Young's modulus temperature correction for mass flow $TFy_M$ is generally related to torque in the flow tubes and the Young's modulus temperature correction for density $TFy_D$ is generally related to bending in the flow tubes. Initial tests in a calibration lab using a flow meter with stainless steel tubes shaped in a "U" configuration have indicated these temperature corrections to be substantially similar in value. Therefore, in embodiments the temperature correction constant $k$ may be set to one. It is possible, however, that future tests with more sensitive measurements, different tube materials, and/or different tube geometries may reveal that the Young's modulus temperature correction for mass flow $TFy_M$ and the Young's modulus temperature correction for density $TFy_D$ are different in value. Therefore, in other embodiments, the temperature correction constant $k$ may be determined to be any number other than one. In one nonlimiting example, $k$ may be set to a value between 0.8 and 1.2.

Once the Young's modulus temperature correction for mass flow $TFy_M$ is determined, method 300 may continue with step 320. In step 320, a mass flow value $\dot{m}$ determined using Equation 1 with Coriolis flow meter 100 is corrected using the Young's modulus temperature correction for mass flow $TFy_M$. In embodiments, the mass flow value $\dot{m}$ may be corrected using the Young's modulus temperature correction for mass flow $TFy_M$ via any method known to those of skill in the art.

In embodiments, step 320 may further comprise step 318, In step 318, a mass error value $Error_m$ may be determined using the Young's modulus temperature correction for mass $TFy_M$ and the expansion temperature correction for density $TFe$ determined via steps 312 and 316:

$$Error_m = \left( \left( \frac{TF_{ym-cal}*TF_{e-cal}*PF_{m-cal}\left(1+\frac{error_{cal}\%}{100}-\frac{Q_{m-zero-cal}}{Q_{m-cal}}\right)}{MF_{m-cal}*TF_{m-cal}*PF_{m-cal}} \right) * \right.$$

$$\left. \left( \frac{MF_{m-oper}TF_{m-oper}PF_{m-oper}}{TF_{ym}TF_ePF_{m-oper}} \right) - 1 \right).$$

$$\text{(Equation 14)}$$

In Equation 14:

$Q_{m-zero-cal}$ is the zero flow mass flow rate measured during factor calibration with a calibration fluid;
$Q_{m-cal}$ is the mass flow rate measured during factory calibration with the calibration fluid;
$PF_{m-real-cal}$ is a real pressure factor determined during calibration;
$PF_{m-cal}$ is an applied pressure factor determined during calibration;
$PF_{m-oper}$ is an applied pressure factor determined during operation;
$PF_{m-real-oper}$ is real pressure factor determined during operation;
$Error_{cal\%}$ is the meter error determined during calibration;
$MF_{m-cal}$ is a meter-specific factor for mass determined during calibration;
$MF_{m-oper}$ is a meter-specific factor for mass determined during operation;
$TF_{e-cal}$ is an expansion temperature correction for density determined during calibration; and
$TFy_{m-cal}$ is a mass temperature correction for density determined during calibration.

The first part of Equation 14 comes from calibration and reflects the mass error value $Error_m$ at 0 °C and 0 barg, and the second part of Equation 14 comes from operation in the application and reflects the error from 0 °C and 0 barg to operating conditions. In practice, the first part of Equation 14 is small in relation to the second part, however. For that reason, in embodiments Equation 14 may be simplified to Equation 15:

$$Error_m = \left(\frac{MF_{m-oper}TF_{m-oper}PF_{m-oper}}{TF_{ym}TF_ePF_{m-oper}}\right) - 1.$$

(Equation 15)

In embodiments, a meter factor *MF* may be determined to correct the mass flow value $\dot{m}$ measured with Coriolis flow meter 100 using Equation 16:

$$MF = \frac{1}{1+\frac{Error_m}{100}}.$$

(Equation 16)

A corrected mass flow value $\dot{m}$ may then be determined by multiplying the measured mass flow value $\dot{m}$ by meter factor MF.

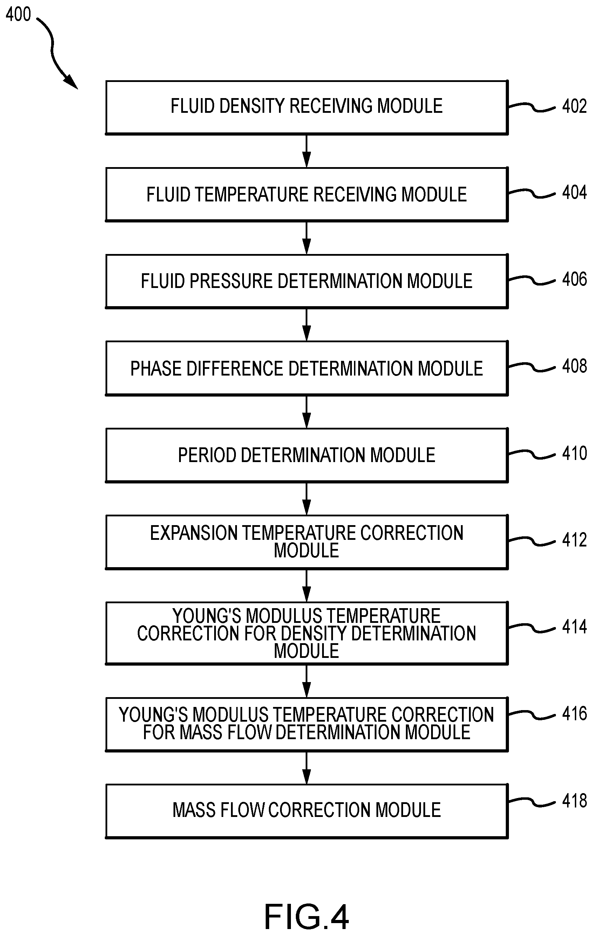

Figure 4 depicts system 400. In embodiments, system 400 may be used to correct a mass flow value $\dot{m}$ measured using a Coriolis flow meter 100 for temperature effects at a fluid temperature *temp* below 0 C. System 400 comprises fluid density receiving module 402, fluid temperature receiving module 404, period determination module 410, Young's modulus temperature correction for density determination module 414, Young's modulus temperature correction for mass flow determination module 416, and mass flow correction module 418. In embodiments, system 400 may further comprise fluid pressure determination module 406, phase difference determination module 408, and expansion temperature correction module 412.

Fluid density receiving module 402 is configured to determine a fluid density $\rho$, such as, for example, the known fluid density $\rho_{ref}$. For example, fluid density receiving module 402 may execute step 302, described above.

Fluid temperature receiving module 404 is configured to determine the fluid temperature *temp,* such as, for example, the known fluid temperature *temp.* For example, fluid temperature receiving module 404 may execute step 304, as described above.

Fluid pressure determination module 406 is configured to determine a fluid pressure *P.* For example, fluid pressure determination module 406 may execute step 306, as described above.

Phase difference determination module 408 is configured to determine a phase difference $\Delta T$. For example, phase difference determination module 408 may execute step 308, as described above.

Period determination module 410 is configured to receive a time period *Tp.* For example, period determination module 410 may execute step 310, as described above.

Expansion temperature correction module 412 is configured to determine an expansion temperature correction for density *TFe.* For example, expansion temperature correction module 412 may execute step 312, as described above.

Young's modulus temperature correction for density determination module 414 is configured to determine a Young's modulus temperature correction for density $TFy_D$ based on the fluid density $\rho$, the fluid temperature *temp,* and the time period *Tp.* For example, Young's modulus temperature correction for density determination module 414 may execute step 314, as described above.

Young's modulus temperature correction for mass flow determination module 416 is configured to determine a Young's modulus temperature correction for mass flow $TFy_M$ based on a temperature correction constant *k* and Young's modulus temperature correction for density $TFy_D$. For example, Young's modulus temperature correction for mass flow determination module 416 may execute step 316, as described above.

Mass flow correction module 418 is configured to correct the mass flow value $\dot{m}$ using the Young's modulus temperature correction for mass flow $TFy_M$. For example, mass flow correction module 418 may execute step 318, as described above.

Tests on liquified nitrogen at a cryogenic calibration facility using a weighing scale have determined that the methods and system of the present Application provide a corrected mass flow value $\dot{m}$ with errors that are less than 0.10%. Some of the tests conducted by the Applicant provided mass flow errors that were as low as 0.07% and 0.01 % for flow meters with flow tubes that are 10.16 centimetres (4 inches) or less in diameter. The methods and system described in the present Application can be extrapolated to larger meter sizes, or those with flow tube diameters that are greater than 10.16 centimetres (4 inches), to provide very accurate mass flow values $\dot{m}$ for higher fluid flows.

The methods and system described by the present Application provide temperature corrections that improve the accuracy of mass flow measurements generated with Coriolis flow meters at sub-zero and cryogenic temperatures. The temperature corrections are stable over time, and do not require calibration of the Coriolis flow meter at a cryogenic calibration facility.

The detailed descriptions of the above examples are not exhaustive descriptions of all examples contemplated by the inventors to be within the scope of the Application. Indeed, persons skilled in the art will recognize that certain elements of the above-described examples may variously be combined or eliminated to create further examples, and such further examples fall within the scope and teachings of the Application. It will also be apparent to those of ordinary skill in the art that the above-described examples may be combined in whole or in part to create additional examples within the scope and teachings of the Application. Accordingly, the scope of the Application should be determined from the following claims.

**Claims**

1. A method for correcting a mass flow value $\dot{m}$ measured using a Coriolis flow meter (100) for temperature effects at a known fluid temperature *temp* below 0 C, the method comprising:

   receiving a known fluid density $\rho_{ref}$;
   receiving the known fluid temperature *temp;*
   receiving a time period *Tp;*
   determining a Young's modulus temperature correction for density $TFy_D$ based on the known fluid density $\rho_{ref}$, the known fluid temperature *temp,* and the time period *Tp;*
   determining a Young's modulus temperature correction for mass flow $TFy_M$ based on a temperature correction constant k and the Young's modulus temperature correction for density $TFy_D$; and
   correcting the mass flow value $\dot{m}$ using the Young's modulus temperature correction for mass flow $TFy_M$.

2. A method as claimed in claim 1, wherein the time period *Tp* is determined based on a measured fluid density $\rho_{indic}$.

3. A method as claimed in claim 1, further comprising:

   receiving a phase difference $\Delta T$, and
   wherein determining the Young's modulus temperature correction for density $TFy_D$ is further based on the phase difference $\Delta T$.

4. A method as claimed in claim 1, further comprising:

   receiving a fluid pressure $P$,
   and wherein the Young's modulus temperature correction for density $TFy_D$ is further based on the fluid pressure $P$.

5. A method as claimed in any one of the preceding claims, wherein the method further comprises:

   determining an expansion temperature correction for density *TFe,*
   and wherein the Young's modulus temperature correction for density $TFy_D$ is further determined based on the expansion temperature correction for density *TFe* based on a known temperature $temp_{ref}$.

6. A method as claimed in any one of the preceding claims, wherein the temperature correction constant $k$ is between 0.8 and 1.2.

7. A method as claimed in any one of claims 1 to 4, wherein the temperature correction constant $k$ is one.

8. A method as claimed in any one of the preceding claims, wherein correcting a mass flow value $\dot{m}$ using the Young's modulus temperature correction for mass flow $TFy_M$ further comprises:
   determining a mass error value $Error_m$ using the Young's modulus temperature correction for mass $TFy_M$.

9. A meter electronics (20) for correcting a mass flow value $\underline{\dot{m}}$ measured using a meter assembly (10) of a Coriolis flow meter (100) for temperature effects at a known fluid temperature *temp* below 0 C, the meter electronics comprising a system processor (20b) configured to.

   receive a known fluid density $\rho_{ref}$;
   receive the known fluid temperature *temp;*
   receive a time period *Tp;*
   determine a Young's modulus temperature correction for density $TFy_D$ based on the known fluid density $\rho_{ref}$, the known fluid temperature *temp,* and the time period *Tp;*
   determine a Young's modulus temperature correction for mass flow $TFy_M$ based on a temperature correction constant $k$ and Young's modulus temperature correction for density $TFy_D$; and

correct the mass flow value $\underline{\dot{m}}$ using the Young's modulus temperature correction for mass flow $TFy_M$.

10. A system (400) for correcting a mass flow value $\dot{m}$ measured using a Coriolis flow meter (100) for temperature effects at a known fluid temperature *temp* below 0 C, the system (400) comprising the meter electronics (20) of claim 9, the system (400) further comprising:

> a fluid density receiving module (402) configured to receive the known fluid density $\rho_{ref}$;
> a fluid temperature receiving module (404) configured to receive the known fluid temperature *temp*;
> a period determination module (410) configured to receive the time period *Tp*;
> a Young's modulus temperature correction for density determination module (414) configured to determine the Young's modulus temperature correction for density $TFy_D$ based on the known fluid density $\rho_{ref}$, the known fluid temperature *temp,* and the time period *Tp*;
> a Young's modulus temperature correction for mass flow determination module (416) configured to determine the Young's modulus temperature correction for mass flow $TFy_M$ based on the temperature correction constant k and the Young's modulus temperature correction for density $TFy_D$; and
> a mass flow correction module (418) configured to correct the mass flow value $\dot{m}$ using the Young's modulus temperature correction for mass flow $TFy_M$.

11. A system (400) as claimed in claim 10, wherein the fluid density receiving module (402) is further configured to determine a measured fluid density $\rho_{indic}$, and the period determination module (410) is further configured to determine the time period *Tp* based on the measured fluid density $\rho_{indic}$.

12. A system (400) as claimed in claim 10, further comprising:

> a phase difference determination module (408) configured to determine a phase difference $\Delta T$, and
> wherein the Young's modulus temperature correction for density determination module (414) is further configured to determine the Young's modulus temperature correction for density $TFy_D$ based on the phase difference $\Delta T$.

13. A system (400) as claimed in claim 10, the system further comprising:

> a fluid pressure determination module (406) configured to determine a measured fluid pressure $P_{indic}$, and
> and wherein the Young's modulus temperature correction for density determination module (414) is further configured to determine the Young's modulus temperature correction for density $TFy_D$ based on the fluid pressure *P*.

14. A system (400) as claimed in any one of claims 10 to 13, wherein the system (400) further comprises:

> an expansion temperature correction module (412) configured to determine an expansion temperature correction for density *TFe* based on a known temperature $temp_{ref}$,
> and wherein the Young's modulus temperature correction for density module (414) is further configured to determine the Young's modulus temperature correction for density $TFy_D$ based on the expansion temperature correction for density *TFe*.

15. A system (400) as claimed in any one of claims 10 to 14, wherein the mass flow correction module (418) is further configured to determine a mass error value $Error_m$ using the Young's modulus temperature correction for mass $TFy_M$.

**Patentansprüche**

1. Verfahren zum Korrigieren eines Massendurchflusswertes $\dot{m}$, der unter Verwendung eines Coriolis-Durchflussmessers (100) für Temperatureinflüsse bei einer bekannten Fluidtemperatur *temp* unter 0 C gemessen wurde, wobei das Verfahren Folgendes umfasst:

> Empfangen einer bekannten Fluiddichte $\rho_{ref}$,
> Empfangen der bekannten Fluidtemperatur *temp,*
> Empfangen einer Zeitperiode *Tp*;
> Bestimmen einer Young-Modul-Temperaturkorrektur für die Dichte $TFy_D$ basierend auf der bekannten Fluiddichte $\rho_{ref}$, der bekannten Fluidtemperatur *temp* und der Zeitperiode *Tp*;

Bestimmen einer Young-Modul-Temperaturkorrektur für den Massendurchfluss $TFy_M$ basierend auf einer Temperaturkorrekturkonstante $k$ und der Young-Modul-Temperaturkorrektur für die Dichte $TFy_D$; und
Korrigieren des Massendurchflusswertes $\dot{m}$ unter Verwendung der Young-Modul-Temperaturkorrektur für den Massendurchfluss $TFy_M$.

2. Verfahren nach Anspruch 1, wobei die Zeitperiode $Tp$ basierend auf einer gemessenen Fluiddichte $\rho_{indic}$ bestimmt wird.

3. Verfahren nach Anspruch 1, das ferner Folgendes umfasst:

   Empfangen einer Phasendifferenz $\Delta T$, und
   wobei das Bestimmen der Young-Modul-Temperaturkorrektur für die Dichte $TFy_D$ ferner basierend auf der Phasendifferenz $\Delta T$ erfolgt.

4. Verfahren nach Anspruch 1, das ferner Folgendes umfasst:

   Empfangen eines Fluiddrucks $P$,
   und wobei die Young-Modul-Temperaturkorrektur für die Dichte $TFy_D$ ferner auf dem Fluiddruck $P$ basiert.

5. Verfahren nach einem der vorhergehenden Ansprüche, wobei das Verfahren ferner Folgendes umfasst:

   Bestimmen einer Expansionstemperaturkorrektur für die Dichte $TFe$,
   und wobei die Young-Modul-Temperaturkorrektur für die Dichte $TFy_D$ ferner bestimmt wird basierend auf der Ausdehnungstemperaturkorrektur für die Dichte $TFe$, die auf einer bekannten Temperatur $temp_{ref}$ basiert.

6. Verfahren nach einem der vorhergehenden Ansprüche, wobei die Temperaturkorrekturkonstante $k$ zwischen 0,8 und 1,2 liegt.

7. Verfahren nach einem der Ansprüche 1 bis 4, wobei die Temperaturkorrekturkonstante $k$ eins ist.

8. Verfahren nach einem der vorhergehenden Ansprüche, wobei das Korrigieren eines Massendurchflusswertes $\dot{m}$ unter Verwendung der Young-Modul-Temperaturkorrektur für Massendurchfluss $TFy_M$ ferner Folgendes umfasst: Bestimmen eines Massenfehlerwertes $Error_m$ unter Verwendung der Young-Modul-Temperaturkorrektur für die Masse $TFy_M$.

9. Messelektronik (20) zum Korrigieren eines Massendurchflusswertes $\dot{m}$, der unter Verwendung einer Messanordnung (10) eines Coriolis-Durchflussmessers (100) für Temperatureffekte bei einer bekannten Fluidtemperatur $temp$ unter 0 C gemessen wurde, wobei die Messelektronik einen Systemprozessor (206) umfasst, der für Folgendes konfiguriert ist:

   Empfangen einer bekannten Fluiddichte $\rho_{ref}$,
   Empfangen der bekannten Fluidtemperatur $temp$;
   Empfangen einer Zeitperiode $Tp$;
   Bestimmen einer Young-Modul-Temperaturkorrektur für die Dichte $TFy_D$ basierend auf der bekannten Fluiddichte $\rho_{ref}$, der bekannten Fluidtemperatur $temp$ und der Zeitperiode $Tp$;
   Bestimmen einer Young-Modul-Temperaturkorrektur für den Massendurchfluss $TFy_M$ basierend auf einer Temperaturkorrekturkonstante $k$ und der Young-Modul-Temperaturkorrektur für die Dichte $TFy_D$; und
   Korrigieren des Massendurchflusswertes $\dot{m}$ unter Verwendung der Young-Modul-Temperaturkorrektur für den Massendurchfluss $TFy_M$.

10. System (400) zum Korrigieren eines Massendurchflusswertes $\dot{m}$, der unter Verwendung eines Coriolis-Durchflussmessers (100) für Temperatureinflüsse bei einer bekannten Fluidtemperatur $temp$ unter 0 C gemessen wurde, wobei das System (400) die Messelektronik (20) von Anspruch 9 umfasst, wobei das System (400) ferner Folgendes umfasst:

    ein Fluiddichte-Empfangsmodul (402), das dafür konfiguriert ist, die bekannte Fluiddichte $\rho_{ref}$ zu empfangen,
    ein Fluidtemperatur-Empfangsmodul (404), das dafür konfiguriert ist, die bekannte Fluidtemperatur $temp$ zu empfangen;

ein Periodenbestimmungsmodul (410), das dafür konfiguriert ist, die Zeitperiode $Tp$ zu empfangen;

ein Bestimmungsmodul (414) der Young-Modul-Temperaturkorrektur für die Dichte, das dafür konfiguriert ist, die Young-Modul-Temperaturkorrektur für die Dichte $TFy_D$ basierend auf der bekannten Fluiddichte $Pref$, der bekannten Fluidtemperatur $temp$ und der Zeitperiode $Tp$ zu bestimmen;

ein Bestimmungsmodul (416) der Young-Modul-Temperaturkorrektur für den Massendurchfluss, das dafür konfiguriert ist, die Young-Modul-Temperaturkorrektur für den Massendurchfluss $TFy_M$ basierend auf der Temperaturkorrekturkonstante $k$ und der Young-Modul-Temperaturkorrektur für die Dichte $TFy_D$ zu bestimmen; und

ein Massendurchflusskorrekturmodul (418), das dafür konfiguriert ist, den Massendurchflusswert $\dot{m}$ unter Verwendung der Young-Modul-Temperaturkorrektur für den Massendurchfluss $TFy_M$ zu korrigieren.

11. System (400) nach Anspruch 10, wobei das Fluiddichteempfangsmodul (402) ferner dafür konfiguriert ist, eine gemessene Fluiddichte $\rho_{indic}$ zu bestimmen, und das Periodenbestimmungsmodul (410) ferner dafür konfiguriert ist, die Zeitperiode $Tp$ basierend auf der gemessenen Fluiddichte $\rho_{indic}$ zu bestimmen.

12. System (400) nach Anspruch 10, das ferner Folgendes umfasst:

ein Phasendifferenzbestimmungsmodul (408), das dafür konfiguriert ist, eine Phasendifferenz $\Delta T$ zu bestimmen, und

wobei das Bestimmungsmodul (414) der Young-Modul-Temperaturkorrektur für die Dichte ferner dafür konfiguriert ist, die Young-Modul-Temperaturkorrektur für die Dichte $TFy_D$ basierend auf der Phasendifferenz $\Delta T$ zu bestimmen.

13. System (400) nach Anspruch 10, wobei das System ferner Folgendes umfasst:

ein Fluiddruckbestimmungsmodul (406), das dafür konfiguriert ist, einen gemessenen Fluiddruck $P_{indic}$ zu bestimmen, und

und wobei das Bestimmungsmodul (414) der Young-Modul-Temperaturkorrektur für die Dichte ferner dafür konfiguriert ist, die Young-Modul-Temperaturkorrektur für die Dichte $TFy_D$ basierend auf dem Fluiddruck $P$ zu bestimmen.

14. System (400) nach einem der Ansprüche 10 bis 13, wobei das System (400) ferner Folgendes umfasst:

ein Ausdehnungstemperaturkorrekturmodul (412), das dafür konfiguriert ist, eine Ausdehnungstemperaturkorrektur für die Dichte $TFe$ basierend auf einer bekannten Temperatur $temp_{ref}$ zu bestimmen, und wobei das Modul (414) der Young-Modul-Temperaturkorrektur für die Dichte ferner dafür konfiguriert ist, die Young-Modul-Temperaturkorrektur für die Dichte $TFy_D$ basierend auf der Ausdehnungstemperaturkorrektur für die Dichte $TFe$ zu bestimmen.

15. System (400) nach einem der Ansprüche 10 bis 14, wobei das Massendurchflusskorrekturmodul (418) ferner dafür konfiguriert ist, einen Massenfehlerwert **$Error_m$** unter Verwendung der Young-Modul-Temperaturkorrektur für die Masse $TFy_M$ zu bestimmen.

**Revendications**

1. Procédé de correction d'une valeur de débit massique, m, mesurée au moyen d'un débitmètre à effet Coriolis (100) pour compenser les effets de la température à une température de fluide connue, *temp,* inférieure à 0 °C, le procédé consistant à :

recevoir une masse volumique de fluide connue, $\rho_{ref}$ ;
recevoir la température de fluide connue, *temp ;*
recevoir une période de temps, *Tp ;*
déterminer une correction de masse volumique en fonction de la température et du module de Young, $TFy_D$, sur la base de la masse volumique de fluide connue, $\rho_{ref}$, de la température de fluide connue, *temp,* et de la période de temps, *Tp ;*
déterminer une correction de débit massique en fonction de la température et du module de Young, $TFy_M$, sur la base d'une constante de correction en fonction de la température, *k*, et de la correction de masse volumique en fonction de la température et du module de Young, $TFy_D$ ; et
corriger la valeur de débit massique, m, au moyen de la correction de débit massique en fonction de la température et du module de Young, $TFy_M$.

**2.** Procédé selon la revendication 1, la période de temps, $Tp$, étant déterminée sur la base d'une masse volumique de fluide mesurée, $\rho_{indic}$.

**3.** Procédé selon la revendication 1, consistant en outre à :

recevoir une différence de phase, $\varDelta T$, et
la détermination de la correction de masse volumique en fonction de la température et du module de Young, $TFy_D$, étant en outre basée sur la différence de phase, $\varDelta T$.

**4.** Procédé selon la revendication 1, consistant en outre à :

recevoir une pression de fluide, $P$, et
la correction de masse volumique en fonction de la température et du module de Young, $TFy_D$, étant en outre basée sur la pression de fluide, $P$.

**5.** Procédé selon l'une quelconque des revendications précédentes, le procédé consistant en outre à :

déterminer une correction de masse volumique en fonction de la température de dilatation, $TFe$, et
la correction de masse volumique en fonction de la température et du module de Young, $TFy_D$, étant en outre déterminée sur la base de la correction de masse volumique en fonction de la température de dilatation, $TFe$, sur la base d'une température connue, $temp_{ref}$.

**6.** Procédé selon l'une quelconque des revendications précédentes, la constante de correction en fonction de la température, $k$, étant comprise entre 0,8 et 1,2.

**7.** Procédé selon l'une quelconque des revendications 1 à 4, la constante de correction en fonction de la température, $k$, étant égale à un.

**8.** Procédé selon l'une quelconque des revendications précédentes, la correction d'une valeur de débit massique, $\dot{m}$, au moyen de la correction de débit massique en fonction de la température et du module de Young, $TFy_M$, consistant en outre à :
déterminer une valeur d'erreur massique, $Error_m$, au moyen de la correction de masse en fonction de la température et du module de Young, $TFy_M$.

**9.** Électronique de comptage (20) permettant la correction d'une valeur de débit massique, $\underline{\dot{m}}$, mesurée au moyen d'un ensemble compteur (10) d'un débitmètre à effet Coriolis (100) pour compenser les effets de la température à une température de fluide connue, **temp,** inférieure à 0 °C, l'électronique de comptage comprenant un processeur de système (206) configuré pour :

recevoir une masse volumique de fluide connue, $\rho_{ref}$ ;
recevoir la température de fluide connue, *temp* ;
recevoir une période de temps, $Tp$ **;**
déterminer une correction de masse volumique en fonction de la température et du module de Young, $TFy_D$, sur la base de la masse volumique de fluide connue, $\rho_{ref}$, de la température de fluide connue, *temp,* et de la période de temps, $Tp$ ;
déterminer une correction de débit massique en fonction de la température et du module de Young, $TFy_M$, sur la base d'une constante de correction en fonction de la température, $k$, et de la correction de masse volumique en fonction de la température et du module de Young, $TFy_D$ ; et
corriger la valeur de débit massique, $\dot{m}$, au moyen de la correction de débit massique en fonction de la température et du module de Young, $TFy_M$.

**10.** Système (400) permettant la correction d'une valeur de débit massique, $\dot{m}$, mesurée au moyen d'un débitmètre à effet Coriolis (100) pour compenser les effets de la température à une température de fluide connue, *temp,* inférieure à 0 °C, le système (400) comprenant l'électronique de comptage (20) selon la revendication 9, le système (400) comprenant en outre :

un module de réception de masse volumique de fluide (402), configuré pour recevoir la masse volumique de fluide connue, $\rho_{ref}$ ;

un module de réception de température de fluide (404), configuré pour recevoir la température de fluide connue, *temp* ;

un module de détermination de période (410), configuré pour recevoir la période de temps, *Tp* ;

un module de détermination de la correction de masse volumique en fonction de la température et du module de Young (414), configuré pour déterminer la correction de masse volumique en fonction de la température et du module de Young, $TFy_D$, sur la base de la masse volumique de fluide connue, $\rho_{ref}$, de la température de fluide connue, *temp*, et de la période de temps, *Tp* ;

un module de détermination de la correction de débit massique en fonction de la température et du module de Young (416), configuré pour déterminer la correction de débit massique en fonction de la température et du module de Young, $TFy_M$, sur la base de la constante de correction en fonction de la température, *k*, et de la correction de masse volumique en fonction de la température et du module de Young, $TFy_D$ ; et

un module de correction de débit massique (418), configuré pour corriger la valeur de débit massique, *ṁ,* au moyen de la correction de débit massique en fonction de la température et du module de Young, $TFy_M$.

11. Système (400) selon la revendication 10, le module de réception de masse volumique de fluide (402) étant en outre configuré pour déterminer une masse volumique de fluide mesurée, $\rho_{indic}$, et le module de détermination de période (410) étant en outre configuré pour déterminer la période de temps, *Tp,* sur la base de la masse volumique de fluide mesurée, $\rho_{indic}$.

12. Système (400) selon la revendication 10, comprenant en outre :

un module de détermination de différence de phase (408), configuré pour déterminer une différence de phase, $\Delta T$, et

le module de détermination de la correction de masse volumique en fonction de la température et du module de Young (414) étant en outre configuré pour déterminer la correction de masse volumique en fonction de la température et du module de Young, $TFy_D$, sur la base de la différence de phase, $\Delta T$.

13. Système (400) selon la revendication 10, le système comprenant en outre :

un module de détermination de pression de fluide (406), configuré pour déterminer une pression de fluide mesurée, $P_{indic}$, et

le module de détermination de la correction de masse volumique en fonction de la température et du module de Young (414) étant en outre configuré pour déterminer la correction de masse volumique en fonction de la température et du module de Young, $TFy_D$, sur la base de la pression de fluide, *P*.

14. Système (400) selon l'une quelconque des revendications 10 à 13, le système (400) comprenant en outre :

un module de correction de température de dilatation (412), configuré pour déterminer une correction de masse volumique en fonction de la température de dilatation, *TFe,* sur la base d'une température connue, $temp_{ref}$, et

le module de correction de masse volumique en fonction de la température et du module de Young (414) étant en outre configuré pour déterminer la correction de masse volumique en fonction de la température et du module de Young, $TFy_D$, sur la base de la correction de masse volumique en fonction de la température de dilatation, *TFe.*

15. Système (400) selon l'une quelconque des revendications 10 à 14, le module de correction de débit massique (418) étant en outre configuré pour déterminer une valeur d'erreur massique, $Error_m$, au moyen de la correction de masse en fonction de la température et du module de Young, $TFy_M$.

EP 4 172 575 B1

FIG.1

200

202

SERVER

20

204

METER ELECTRONICS

20a — MEMORY

20b — SYSTEM PROCESSOR

20c — INTERFACE

METER ELECTRONICS

MEMORY — 204a

SYSTEM PROCESSOR — 204b

INTERFACE — 204c

206

100

208

CORIOLIS FLOW METER

ADDITIONAL MEASUREMENT DEVICE

# FIG.2

300

```
┌─────────────────────────────────────────────────┐
│   RECEIVE A KNOWN FLUID DENSITY ρref             │─── 302
└─────────────────────────────────────────────────┘
                        │
                        ▼
┌─────────────────────────────────────────────────┐
│   RECEIVE A KNOWN FLUID TEMPERATURE TEMPref      │─── 304
└─────────────────────────────────────────────────┘
                        │
                        ▼
┌─────────────────────────────────────────────────┐
│   RECEIVE A FLUID PRESSURE P                     │─── 306
└─────────────────────────────────────────────────┘
                        │
                        ▼
┌─────────────────────────────────────────────────┐
│   RECEIVE A PHASE DIFFERENCE ΔT                  │─── 308
└─────────────────────────────────────────────────┘
                        │
                        ▼
┌─────────────────────────────────────────────────┐
│   RECEIVE A TIME PERIOD Tp                       │─── 310
└─────────────────────────────────────────────────┘
                        │
                        ▼
┌─────────────────────────────────────────────────┐
│   DETERMINE AN EXPANSION TEMPERATURE             │─── 312
│   CORRECTION FOR DENSITY TFe                     │
└─────────────────────────────────────────────────┘
                        │
                        ▼
┌─────────────────────────────────────────────────┐
│   DETERMINE A YOUNG'S MODULUS                    │─── 314
│   TEMPERATURE CORRECTION FOR DENSITY TFyD        │
└─────────────────────────────────────────────────┘
                        │
                        ▼
┌─────────────────────────────────────────────────┐
│   DETERMINE YOUNG'S MODULUS TEMPERATURE          │─── 316
│   CORRECTION FOR MASS FLOW TFyM                  │
└─────────────────────────────────────────────────┘
                        │
                        ▼
┌─────────────────────────────────────────────────┐
│   DETERMINE A MASS ERROR VALUE ERRORm            │─── 318
└─────────────────────────────────────────────────┘
                        │
                        ▼
┌─────────────────────────────────────────────────┐
│   CORRECT A MASS FLOW VALUE ṁ                    │─── 320
└─────────────────────────────────────────────────┘
```

# FIG.3

400

| FLUID DENSITY RECEIVING MODULE | 402 |

| FLUID TEMPERATURE RECEIVING MODULE | 404 |

| FLUID PRESSURE DETERMINATION MODULE | 406 |

| PHASE DIFFERENCE DETERMINATION MODULE | 408 |

| PERIOD DETERMINATION MODULE | 410 |

| EXPANSION TEMPERATURE CORRECTION MODULE | 412 |

| YOUNG'S MODULUS TEMPERATURE CORRECTION FOR DENSITY DETERMINATION MODULE | 414 |

| YOUNG'S MODULUS TEMPERATURE CORRECTION FOR MASS FLOW DETERMINATION MODULE | 416 |

| MASS FLOW CORRECTION MODULE | 418 |

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG T. et al.** Coriolis mass flow measurement at cryogenic temperatures. *FLOW MEASUREMENT AND INSTRUMENTATION, BUTTERWORTH-HEINEMANN, OXFORD, GB*, June 2009, vol. 20 (3), 110-115

- **MR. H.M. LEDBETTER**. Stainless steel elastic constants at low temperatures. *Journal of Applied Physics article*, March 1981